Europäisches Patentamt

(19) European Patent Office

Office européen des brevets

(11) Numéro de publication: **0 125 151**
A2

(12) **DEMANDE DE BREVET EUROPEEN**

(21) Numéro de dépôt: **84400252.7**

(22) Date de dépôt: **07.02.84**

(51) Int. Cl.³: **G 01 D 9/40**

(30) Priorité: **09.02.83 FR 8302060**

(43) Date de publication de la demande:
**14.11.84 Bulletin 84/46**

(84) Etats contractants désignés:
**CH DE FR GB IT LI NL SE**

(71) Demandeur: **BENSON Société anonyme dite:**
**Z.I. des petites haies 1, rue Jean Lemoine**
**F-94015 Creteil(FR)**

(72) Inventeur: **Dard, Jean-Claude**
**29, rue des Glycines**
**F-93250 Villemomble(FR)**

(72) Inventeur: **Le Tuan, Phac**
**1, Allée du Grippet**
**F-94470 Boissy-Saint-Leger(FR)**

(72) Inventeur: **Roche, Michel**
**34, Route Cossée**
**F-77181 Courtry(FR)**

(74) Mandataire: **Chareyron, Lucien et al,**
**Schlumberger Limited Service Brevets c/o Giers, B.P. 121**
**12, place des Etats-Unis**
**F-92124 Montrouge Cedex(FR)**

(54) **Machine graphique.**

(57) Cette machine graphique comprend un dispositif d'impression incluant une tête de dessin (30) faisant partie d'un module d'impression par trait et une tête d'écriture (40) faisant partie d'un module d'impression par points. Un dispositif de commande du dispositif d'impression comprend des moyens de sélection recevant des données graphiques relatives à des éléments graphiques à reproduire pour déterminer celui des modules d'impression par lequel ces éléments graphiques doivent être imprimés.

Le dispositif de commande comprend aussi des moyens d'activation sélective des modules d'impression pour transmettre sélectivement les données graphiques au module sélectionné et commander l'impression de ces données.

./...

Fig.1

## Machine graphique

La présente invention concerne une machine graphique capable d'imprimer des figures, dessins, caractères alphanumériques et/ou symboles sur un même support.

Actuellement, l'on connaît deux types de machines possédant les deux fonctions de dessin et d'écriture.

Les premières sont des traceurs traditionnels équipés d'une option écriture. Les caractères alphanumériques sont reproduits au moyen de la plume utilisée pour le dessin et sont traités en tant qu'éléments de dessin. Aussi, les performances au niveau écriture sont faibles ; la vitesse d'impression ne dépasse pas dix caractères par seconde.

Les secondes sont des imprimantes équipées d'une option dessin. Le trait du dessin est effectué par la tête d'impression fonctionnant par points, ce qui donne un résultat de qualité très insuffisante et impose en général des contraintes au niveau du logiciel de mise en oeuvre.

La présente invention a pour but de fournir une machine capable de remplir à la fois la fonction de dessin, avec des performances élevées sur les plans de la qualité et de la vitesse d'exécution du dessin, et la fonction d'écriture avec une bonne vitesse d'impression, et ce pour pouvoir imprimer tous éléments graphiques sur un même support d'impression en combinant vitesse et qualité de résultat.

Ce but est atteint grâce à une machine du type comportant un dispositif d'impression capable d'imprimer des figures, dessins, caractères alphanumériques et/ou symboles sur un support, et un dispositif de commande recevant des données graphiques sous forme numérique et relatives à des éléments graphiques à reproduire sur le même support d'impression et élaborant en réponse des signaux de commande du dispositif d'impression, machine dans laquelle, conformément à l'invention :

-le dispositif d'impression comprend un module d'impression par points et un module d'impression par trait distincts l'un de l'autre, et

-le dispositif de commande comporte : des moyens de sélection recevant les données graphiques pour discriminer en fonction de critères préalables entre celles relatives à des éléments graphiques devant être imprimés au moyen du module d'impression par points et celles relatives à des éléments graphiques devant être imprimés au moyen du module d'impression par trait, et des moyens d'activation sélective du module d'impression par points et du module d'impression par trait pour transmettre les données graphiques à imprimer sélectivement auxdits modules, en fonction du résultat de la discrimination effectuée, et commander l'impression de ces données.

Les critères préalables de discrimination entre les données reçues comprennent de préférence, pour chaque donnée reçue, le temps d'exécution et la qualité de l'aspect graphique de l'impression de l'élément graphique correspondant à cette donnée au moyen de l'un ou l'autre des modules d'impression. En d'autres termes, le but de la discrimination réalisée est bien d'optimiser vitesse et qualité d'impression.

A cet effet, les moyens de sélection sont agencés pour effectuer une discrimination en fonction d'informations contenues dans les données graphiques reçues et relatives notamment à l'orientation et/ou la taille et/ou la nature des éléments graphiques correspondant à ces données.

Ainsi, si l'on dispose par exemple d'un module d'impression par points à tête d'inscription de type matriciel qui ne permet une impression avec une bonne qualité graphique que dans un nombre limité de directions privilégiées, la sélection du module d'impression par points ne sera possible que si l'information d'orientation contenue dans la donnée graphique reçue correspond à l'une de ces directions privilégiées.

De plus, et même dans ce dernier cas, la sélection du module d'impression par points peut n'être rendue effective que si la taille de l'élément graphique est limitée, c'est-à-dire suffisamment petite pour que le temps d'exécution de l'impression par le module d'impression par points reste inférieur à celui qui serait nécessaire pour l'impression du même élément graphique par le module d'impression par trait.

Si l'on prend par exemple le cas d'un caractère alphanumérique, la sélection du module d'impression par points, tel qu'un module à tête d'impression de type matriciel, est alors effectuée sous les conditions que:

-l'orientation désirée pour l'impression du caractère est une des directions de travail privilégiées de la tête d'impression, typiquement selon un axe X ou un axe Y orthogonal,

-et que la taille du caractère est inférieure à une valeur limite à partir de laquelle il serait plus rapide d'imprimer le caractère au moyen du module d'impression par trait, tel qu'un module à tête de traçage.

La nature des éléments graphiques correspondant aux données reçues peut constituer aussi une base pour la sélection du module d'impression. C'est ainsi qu'une distinction est possible entre éléments graphiques représentant des caractères alphanumériques et symboles (dont notamment points et tirets), pour lesquels le module d'impression par points peut être sélectionné sous réserve que les conditions éventuelles d'orientation et de taille soient satisfaites, et entre éléments graphiques représentant des traits continus de dessin, pour lesquels le module d'impression par trait est sélectionné.

On peut également prévoir d'influencer la sélection des modules d'impression par points et par trait à partir d'une commande extérieure qui peut introduire un autre critère ou modifier les critères préétablis pour la discrimination et leur importance respective. C'est ainsi qu'on peut par exemple privilégier la vitesse d'exécution aux dépens de la fidélité d'exécution des éléments graphiques correspondant à certaines données graphiques pour obtenir rapidement l'impression d'un "brouillon" de document. L'exécution des caractères peut par exemple être simplifiée en exécutant tous les caractères au même format avec le module d'impression par points.

La sélection en fonction de la nature des éléments graphiques peut également s'appuyer sur des données graphiques correspondant à des éléments de remplissage de zone et comportant des indications de contour de la zone et des informations relatives à la texture de remplissage.

Par module d'impression, on entend ici la combinaison d'une tête d'inscription et de son circuit de commande.

Dans le dispositif selon l'invention les modules d'impression par points et par trait sont distincts sur au moins une de leurs parties fonctionnelles.

Selon une configuration de la machine graphique conforme à l'invention, le module d'impression par points et le module d'impression par trait comportent des têtes d'inscription respectives distinctes l'une de l'autre, par exemple une tête d'écriture et une tête de dessin montées sur un support commun mobile par rapport à un support d'impression.

D'autres particularités et avantages de la machine conforme à l'invention ressortiront à la lecture de la description faite ci-après, à titre indicatif mais non limitatif, en référence aux dessins annexés sur lesquels:

- la figure 1 est une vue très schématique en perspective d'un mode de réalisation d'une machine conforme à l'invention ;

- la figure 2 est le schéma général du dispositif de commande de la machine de la figure 1 ;

- la figure 3 est un diagramme montrant le fonctionnement du circuit de sélection faisant partie du dispositif de commande de la figure 2 ; et

- la figure 4 est un diagramme illustrant une variante du fonctionnement illustré par la figure 3.

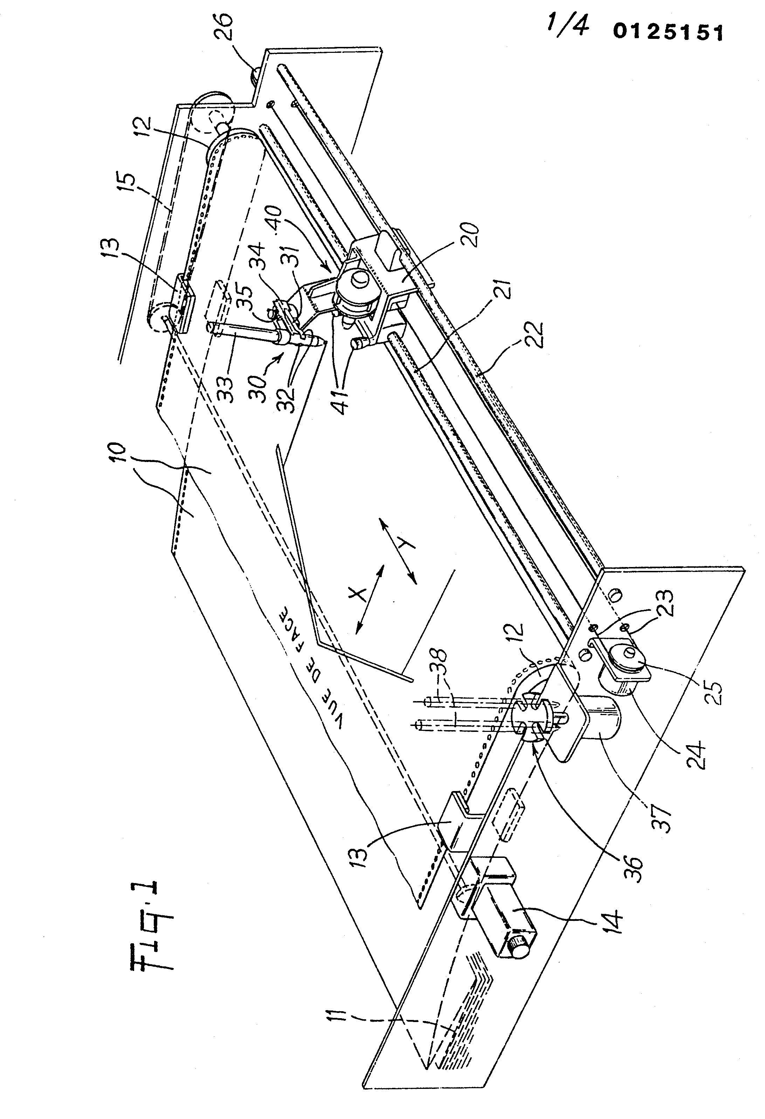

Sur la figure 1, la référence 10 désigne un support d'impression sous forme d'une bande de papier portant une rangée de perforations le long de chacun de ses bords. La bande 10 est tirée d'une réserve 11, passe sur un tambour 12 et est entraînée par des mécanismes 13 coopérant avec des perforations de la bande. Les mécanismes d'entraînement 13 sont du type de ceux utilisés dans les machines à tracer ; ils se différencient de ceux des imprimantes en qu'ils permettent un déplacement à vitesse élevée (par exemple 0,5 à 1 m/s) de la bande en avant et en arrière, sous l'action d'un moteur 14, un organe de tension de bande étant interposé sur le trajet de la bande 10 entre la réserve 11 et le rouleau 12. Le tambour 12 est entraîné en rotation en synchronisme avec la bande 10 au moyen d'une courroie de renvoi 15. On notera, en variante, que le tambour 12 peut rester immobile, le bande 10 glissant sur celui-ci.

Un chariot 20, guidé sur des glissières 21, 22 est mobile en translation parallèlement à l'axe du tambour 12. L'entrainement du chariot est réalisé au moyen d'un moteur 24 et d'un cable 23 qui est relié au chariot et passe sur une poulie 25 mue par le moteur 24 et une poulie de renvoi 26.

Le chariot 20 porte une tête de dessin 30 et une tête d'écriture 40 appartenant respectivement à un module d'impression par trait et un module d'impression par points.

La tête de dessin est du type de celles utilisées dans des traçeurs traditionels pour réaliser, avec sa commande associée, des impresssions rapides et de qualité en mode trait. Dans l'exemple illustré, elle comporte un support 31 abaissable et relevable et portant un collier 32 dans lequel est serré un crayon ou stylo 33. Le support 31 est solidaire de l'organe mobile d'un électro-aimant 34 porté par le chariot 20. Lorsque la bobine de l'électro-aimant est excitée, la pointe du stylo 33 est appliquée, avec l'aide d'un ressort 35, sur la bande 10 contre la surface du tambour 12. En l'absence d'excitation de la bobine de l'électro-aimant, le stylo 33 est relevé à l'encontre de la force d'application du ressort 35. On notera que la tête de dessin 30 et sa commande sont d'un type classique connu en soit.

La tête d'écriture est du type de celles utilisées dans des dispositifs d'impression traditionnels pour réaliser des impressions de caractères ou symboles par points avec une grande vitesse d'impression. Elle peut être multipoints ou non, c'est-à-dire comporter plusieurs organes juxtaposés d'inscription de point ou un seul. Dans l'exemple illustré, la tête 40 est une tête d'impression dite matricielle du type à aiguilles, fixée sur le chariot 20. On pourrait utiliser une tête d'impression matricielle d'un autre type, par exemple à jet d'encre. La tête d'impression à aiguilles 40 est disposée de manière à former, avec sa commande associée, des caractères alphanumériques ou autres symboles sur la bande 10, au niveau du rouleau 12. Une cassette (non représentée) renfermant un ruban encreur est montée sur des axes 41 portés par le chariot 20, l'un de ces axes étant entraîné en rotation au moyen d'un moteur (non visible sur la figure 1) afin de déplacer le ruban encreur entre la tête 40 et la bande 10 au fur et à mesure du fonctionnement en mode points.

Le moteur 14 assure les mouvements relatifs entre la bande 10 et le chariot 20 suivant une direction X tandis que le moteur 24 assure les mouvements relatifs entre la bande 10 et le chariot 20 suivant une direction Y perpendiculaire à X. Les moteurs 14 et 24 peuvent chacun tourner dans un sens et dans l'autre afin d'autoriser des mouvements dans les deux sens parallèlement à chacune des directions X et Y. Dans l'exemple illustré, les têtes 30 et 40 ont une même coordonnée suivant l'axe Y. Tous en étant solidaires en mouvements l'une de l'autre, les deux têtes pourraient être décalées le long de cet axe.

A une extrémité du rouleau 12 peut être monté un barillet rotatif 36 entraîné par un moteur 37 et portant des stylos 38 en réserve afin de permettre,comme connu en soit, un changement automatique du stylo de la tête 30 lorsqu'une couleur ou une épaisseur de trait différente est souhaitée.

Pour effectuer ce changement, le chariot 20 est déplacé jusqu'à amener et déposer le stylo 33 à l'emplacement qu'il occupait sur le barillet 36, puis reculé pour permettre la rotation du barillet 36 et avancé à nouveau pour saisir automatiquement dans le collier 32 le nouveau stylo présenté.

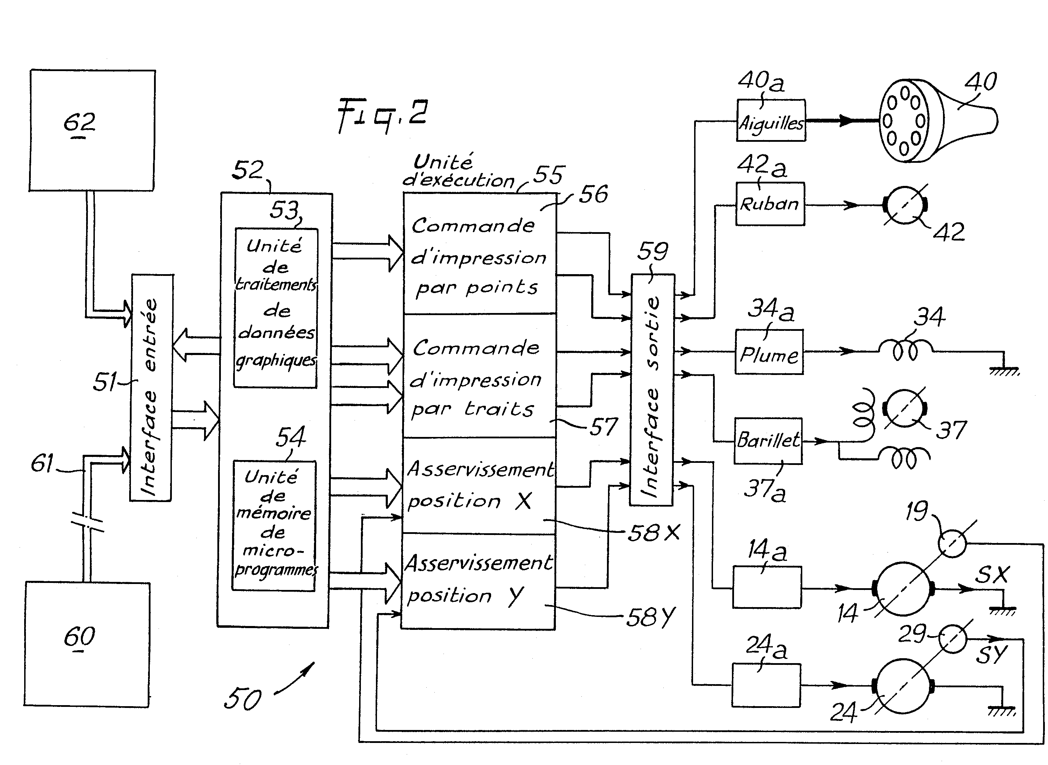

Les moteurs 14 (déplacement X), 24 (déplacement Y), 37 (barillet) et celui d'entraînement du ruban d'impression de la tête d'écriture, ainsi que l'activation de la tête de dessin et de la tête d'écriture sont commandés électriquement par des signaux élaborés au moyen d'un dispositif de commande 50 dont un mode de réalisation est présenté sur la figure 2.

Un circuit 51 d'interface d'entrée reçoit les données graphiques à traiter provenant par exemple d'un ordinateur pilote 60 et acheminées par une ligne de transmission 61. Ces données graphiques sont sous forme numérique et mixées, c'est-à-dire comprennent des données relatives à des éléments de dessin et/ou des caractères alphanumériques ou symboles. Le circuit 51 est également relié à un panneau de commande 62 par l'intermédiare duquel un opérateur peut commander le fonctionnement de la machine et, éventuellement, entrer des données graphiques à imprimer.

Les données numériques reçues par l'intermédiaire du circuit d'interface d'entrée sont traitées au moyen d'un module graphique microprogrammé 52 comprenant une unité de mémoire de microprogrammes 54. La fonction de ce module est de sélectionner le meilleur outil (module d'impression par points ou module d'impression par trait) pour réaliser l'impression de données reçues.

L'activation de la tête d'écriture ou de la tête de dessin est commandée par une unité d'exécution 55, en fonction de la sélection effectuée, pour réaliser l'impression des données graphiques en exécutant le microprogramme d'impression sélectionné dans l'unité de mémoire 54.

Un circuit 59 d'interface de sortie reçoit les signaux d'exécution pour leur transmission par l'intermédiaire d'étages amplificateurs respectifs aux différents organes à commander.

La tête d'écriture 40 reçoit des signaux de commande des aiguilles produits par l'intermédiaire d'un circuit d'amplification 40a, ainsi qu'un signal de commande du moteur pas à pas 42 d'entraînement du ruban transmis à la tête par l'intermédiaire d'un amplificateur 42a.

La tête de dessin 30 reçoit un signal de commande de l'électro-aimant 34 qui lui est transmis par l'intermédiaire d'un amplificateur 34a tandis que le moteur 37 d'entraînement du carrousel est commandé à travers un amplificateur 37a.

Enfin, sont encore transmis à travers le circuit d'interface de sortie les signaux de commande des moteurs 14 et 24 de déplacement en X et en Y, signaux amplifiés par des circuits respectifs 14a et 24a.

Le fonctionnement du dispositif de commande est le suivant.

L'unité de traitement de données graphiques 53 effectue la reconnaissance des informations graphiques entrantes, leur mise au format interne, s'il y a lieu, et la sélection du mode points (écriture) ou du mode trait (dessin) en fonction des informations contenues dans les données reçues et de critères prédéterminés liés aux possibilités d'exécution de la machine dans l'un ou l'autre mode et à la qualité du résultat souhaité.

La figure 3 est un diagramme illustrant les opérations qui peuvent par exemple être effectuées par l'unité 53 pour choisir entre le mode points et le mode trait. Les données graphiques reçues sous forme numérique peuvent par exemple être de trois types suivant la nature de l'élément graphique correspondant :

- données relatives à des éléments graphiques tels que caractères ou symboles comportant chacune un code d'identification du caractère ou symbole et des informations caractérisant l'emplacement où le caractère doit être imprimé, et, éventuellement la taille ou le format du caractère et son orientation,

- données relatives à des éléments graphiques de dessin comportant chacune des informations graphiques primitives telles que coordonnées des deux extrémités d'un vecteur, coordonnées du centre et valeur du rayon d'un cercle,......., et, eventuellement épaisseur et couleur du trait et,

-données relatives à des éléments graphiques de remplissage, comportant les informations définissant le contour de la zone à remplir et un code identifiant la texture du remplissage (hachurage, symboles et, éventuellement, des codes de coordonnées des éléments de remplissage.

Les critères de base retenus pour la sélection sont vitesse et qualité d'exécution de l'impression.

Suivant le mode de sélection illustré par la figure 3, à titre d'exemple, un premier critère examiné consiste dans la nature de l'élément graphique correspondant à la donnée reçue. Il est ici convenu que lorsque les éléments graphiques à imprimer ne comportent pas de caractères alphanumériques ou symboles et ne forment pas un remplissage de zone, c'est nécessairement le mode trait qui est sélectionné. Lorsque, par contre, les éléments graphiques à imprimer comportent des caractères alphanumériques ou symboles, ou forment un remplissage de zone, la sélection est effectuée comme suit.

La tête d'impression par points est normalement prévue pour l'inscription de caractères orientés selon des lignes et/ou des colonnes correspondant aux directions de déplacement principales en X et Y du chariot porte-tête par rapport au support d'inscription graphique.

Dans cet exemple, les caractères ou symboles à orientation privilégiée sont ceux tracés par un mouvement relatif instantané du papier et du chariot porte-tête dans une seule de ces directions. C'est pour ces orientations que la tête points permet d'obtenir normalement la meilleure qualité graphique tout en opérant à grande vitesse. Les discontinuités ou l'aspect tremblé des éléments graphiques tracés à partir de la tête points peuvent être en effet minimisés pour ces orientations.

Au contraire la qualité graphique obtenue avec la tête points tend à se détériorer normalement pour des orientations obliques par rapport à ces directions. De même, même pour des caractères orientés dans les directions privilégiées, la vitesse d'exécution devient supérieure, à qualité graphique égale, avec la tête trait lorsque les dimensions de ce caractère dépassent une valeur déterminée.

Ainsi, dans le cas où la donnée graphique correspond à un caractère ou symbole (bloc 101, sortie OUI) :

- si l'impression doit être réalisée avec une orientation non privilégiée (bloc 102, sortie OUI), c'est-à-dire une orientation différente de celle(s) qu'il est possible de donner aux caractères ou symboles imprimés avec la tête d'écriture utilisée en conservant une bonne qualité graphique, le mode trait est sélectionné (bloc 103). Avec une tête d'écriture de type matriciel, les directions privilégiées sont normalement les directions X et Y.

- si l'impression doit être réalisée avec une orientation privilégiée, ou si aucune indication d'orientation ne figure dans la donnée graphique reçue (bloc 102 sortie NON),

.. si la taille désirée du caractère ou symbole (c'est-à-dire notamment au moins l'une de ses dimensions selon les axes X Y, et notamment sa hauteur) est située en dehors d'un intervalle prédéterminé c'est-à-dire est supérieure à une première limite ou inférieure à une deuxième limite, (bloc 104, sortie NON) le mode trait est sélectionné (bloc 105);

.. si la taille désirée du caractère ou symbole est comprise dans l'intervalle de taille prédéterminé, ou n'est pas spécifiée (bloc 104 sortie OUI), le mode points est sélectionné (bloc 106).

La valeur limite de taille de caractères ou symboles au-delà de laquelle le mode trait est préféré est choisie en fonction du critère de vitesse d'exécution, c'est-à-dire que le mode trait est choisi pour un caractère ou symbole à partir du moment où l'on va plus vite à tracer les traits en formant le caractère ou symbole qu'à les remplir par points pour une qualité graphique déterminée (netteté, continuité du caractère notamment). On notera que ce critère de choix n'est valable que lorsque la tête d'écriture utilisée permet une impression par points de caractères ou symboles de tailles différentes. Dans le cas où cette tête d'écriture ne permet qu'un seul ou qu'un nombre limité de formats d'impression pour chaque caractère ou symbole, la sélection du mode points n'est effectuée que si la taille désirée du caractère ou symbole correspond à un format possible ou n'est pas spécifiée.

Dans le cas où la donnée graphique correspond à un remplissage de zone (bloc 110 sortie OUI) :

- si le remplissage est un hachurage (bloc 112 sortie OUI), le mode trait est sélectionné (bloc 113).

- si le remplissage est une texture (bloc 112 sortie NON);

.. si la texture est cohérente (bloc 114 sortie OUI)(par exemple pour faire apparaître des veinures), le mode trait est sélectionné (bloc 115),

.. si la texture n'est pas cohérente (bloc 114 sortie NON), elle peut être formée de traits ou de caractères ou symboles. Dans le cas de caractères ou symbole, le mode trait ou le mode points est sélectionné comme indiqué ci-dessus. Ainsi on vérifie (bloc 116) si l'élément à tracer a une orientation non privilégiée, avec, si la sortie est OUI, commande de mode trait (bloc 117) et, si la sortie est NON, vérification de la taille (bloc 118). Si la taille de l'élément de remplissage est limitée, sortie OUI, le mode points est utilisé (bloc 120) ainsi par exemple pour des points positionnés de façon pseudo aléatoire. Dans le cas contraire, le mode trait est utilisé (bloc 119).

Lorsque la donnée graphique ne correspond ni à un caractère ou symbole (bloc 101 sortie NON), ni à un élément de remplissage de zone (bloc 110 sortie NON) le mode trait est commandé (bloc 111).

Lorsque le mode trait est sélectionné pour imprimer un élément graphique de quelque nature que ce soit, une sélection supplémentaire peut être effectuée au niveau du module 52 en fonction, d'une part, d'indications ou d'absences d'indications contenues dans les données reçues et, d'autre part, des possibilités offertes par la machine en mode trait (assortiment de stylos disponibles sur le carrousel).

Suivant le mode particulier de sélection décrit ci-dessus, le mode points ne peut être choisi que pour des caractères alphanumériques ou symboles. Dans cette catégorie figurent également les points et tirets ; le mode points peut donc en particulier être sélectionné pour l'impression de lignes droites discontinues (pointillés ou tirets).

Selon une forme de réalisation de l'invention, il est également possible de faire intervenir dans la sélection du mode points et du mode trait un autre critère en fonction duquel on privilégie la vitesse d'exécution au dépens d'une fidélité rigoureuse aux indications graphiques notamment dans l'exécution de caractères ou symboles (ou également par exemple de lignes épaisses nécessitant normalement plusieurs traçages côte à côte en mode trait). C'est ainsi que l'on peut obtenir un tracé "au brouillon" de façon très rapide en imprimant tous les caractères ou symboles en un seul format standard obtenu en mode points, quelle que soit la taille des caractères prévus dans le dessin définitif (ainsi que par exemple en exécutant toutes les lignes avec l'épaisseur correspondant à une seule passe en mode trait). A cet effet, un bouton de commande de priorité vitesse (non représenté) peut être manoeuvré par l'opérateur qui introduit dans le programme de la figure 3 une étape supplémentaire aux emplacements marqués par les flèches 130 et 132 respectivement entre les blocs 101 et 102 et entre les blocs 114 et 116.

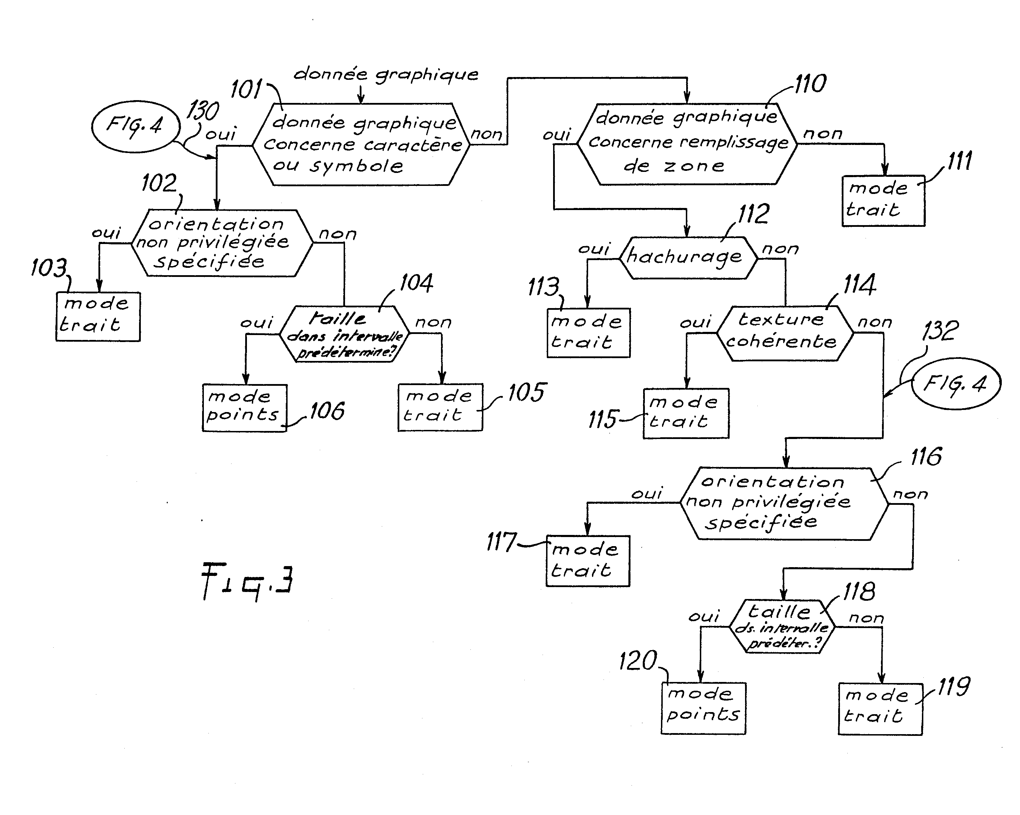

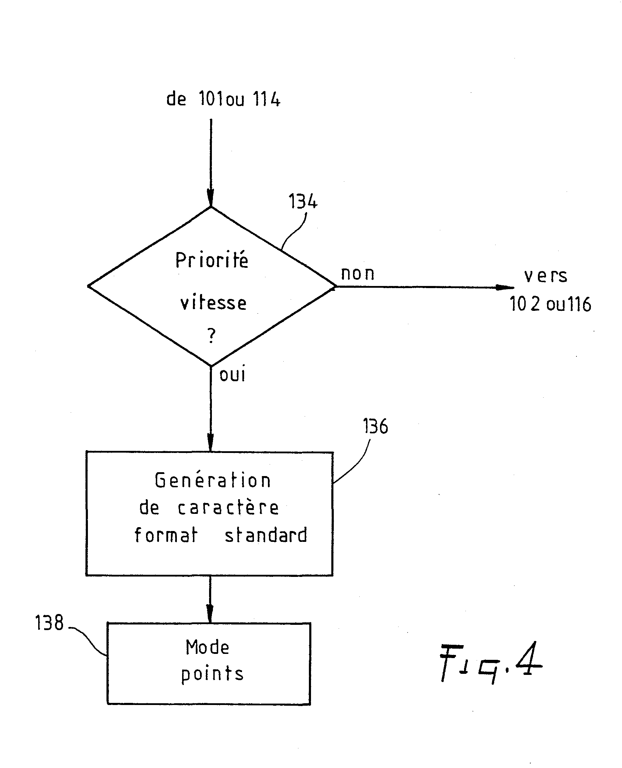

Ainsi, tout caractère ou symbole (bloc 101 sortie OUI) ou élément de texture non cohérente (bloc 114 sortie NON) fait l'objet d'une vérification de l'état du bouton priorité vitesse (bloc 134, figure 4). Si la priorité n'est pas spécifiée (sortie NON) le programme poursuit son déroulement vers les blocs 102 ou 116 de vérification d'orientation. Si la vitesse doit être privilégiée (sortie OUI) le microprogramme génère un format standard pour le caractère (bloc 136) propre à en permettre l'exécution à grande vitesse en mode points (bloc 138).

Lorsque la sélection du mode trait ou du mode points a été effectuée, l'exécution de l'impression est réalisée au moyen de l'unité d'exécution 55 (figure 2).

L'unité d'exécution 55 comprend une unité 56 de commande d'impression en mode points qui constitue, avec les circuits amplificateurs 40a, 42a, la tête 40 et le dispositif à ruban entraîné par le moteur 42, le module d'impression en mode points. L'unité 56 est activée en réponse à la sélection du mode points pour commander l'impression de l'élément graphique représenté par la donnée reçue, en mettant en oeuvre un microprogramme correspondant sélectionné dans la mémoire 54. L'unité de commande 56 peut être formée par tout dispositif connu en soi pour la commande de tête à aiguilles, et comporter des moyens d'assistance graphique tels que générateur de caractères. Cette unité 56 transmet à travers le circuit d'interface 59 un signal de contrôle des aiguilles destiné à la commande de la tête 40 et un signal de contrôle de ruban destiné à la commande du moteur 42.

L'unité d'exécution 55 comprend en outre une unité 57 de commande d'impression en mode trait qui constitue, avec les circuits amplificateurs 34a, 37a, la commande de l'éléctro-aimant 34 de la tête 30 et le dispositif à barillet 36 entraîné par le moteur 37 , le module d'impression en mode trait. L'unité 57 est activée, en réponse à la sélection du mode trait, pour commander le tracé de l'élément graphique représenté par la donnée reçue, en mettant en oeuvre un microprogramme correspondant sélectionné dans la mémoire 54. De la même façon que l'unité 56, l'unité de commande 57 peut être formée par tout dispositif connu en soi pour la commande de tête à tracer et comporter éventuellement des moyens d'assistance graphique.

L'unité 57 transmet à travers le circuit d'interface 59, un signal de contrôle de tracé destiné à la commande de l'électro-aimant 34 et un signal de sélection de plume destiné à la commande du moteur 37.

Enfin, l'unité d'exécution comprend une unité de commande d'asservissement 58X pour asservir la position du support d'impression 10 en X et une unité de commande d'asservissement 58Y pour asservir la position du chariot 20 en Y. Les unités 58X et 58Y reçoivent d'une part, des informations de consigne représentant les coordonnées de consigne de la tête activée par rapport à une origine sur le support d'impression 10 et, d'autre part, des informations de mesure SX ,SY fournies par des codeurs angulaires 19, 29 entraînés en rotation par les moteurs 14, 24 et représentant les coordonnées de la valeur absolue instantanée d'une des têtes, par exemple la tête de dessin. Du fait que les deux têtes sont dans des positions fixes l'une par rapport à l'autre, la connaissance de la position absolue d'une des têtes est suffisante pour déduire la position absolue de l'autre tête et passer sans difficulté du mode d'impression par points au mode d'impression par trait, ou inversement, sur le même support d'impression. Les unités de commande d'asservissement 58X, 58Y sont aussi des dispositifs bien connus en soi ; leurs sorties alimentent les amplificateurs 14a et 24a à travers le circuit d'interface 59.

De ce qui précède, il ressort que la machine graphique conforme à l'invention, par la combinaison de deux modes d'impression par points et par trait alliée à une discrimination adéquate parmi les données graphiques reçues, permet d'optimiser l'impression de tous les éléments graphiques sur un même support en termes d'exécution et qualité graphique de l'impression. Une telle machine ouvre ainsi de nouvelles possibilités d'impression très performantes, par exemple l'insertion dans un texte imprimé de dessins ou figures imprimés à une vitesse aussi élevée que celle atteinte par les traceurs traditionnels (c'est-à-dire une vitesse de tracé d'environ 0,5 à 1m/S) ; ou encore la mise en place à côté de dessins de commentaires imprimés à une vitesse aussi élevée que celle atteinte par les imprimantes traditionnelles (c'est-à-dire 50 car./s ou plus).

Dans un exemple, la tête d'impression de caractères peut imprimer simultanément 7 points de diamètre 0,35 mm alignés dans le sens des X avec un intervalle d'axe à axe entre points de 0,37 mm. Le pas d'avancement de la tête dans le sens des Y, à l'intérieur d'un caractère est de : 0,35 mm. La hauteur du caractère qui peut être tracé en déplaçant la tête d'impression selon l'axe Y seulement est donc au maximum de 2,5 mm environ. Pour tracer un caractère de hauteur supérieure, avec un module d'impression capable de tracer 100 caractères seconde, on peut procéder par passes successives décalées dans le sens des X. Au delà de huit passes correspondant à un caractère de hauteur de caractère de 20 millimètres, on peut commencer à envisager de passer à une impression en mode trait dans cet exemple. Si la hauteur d'un caractère ou symbole à imprimer est trop faible, par exemple égale ou inférieure à l'intervalle entre deux points adjacents, il devient également nécessaire de réaliser l'impression en mode trait.

Bien entendu il s'agit là d'indications d'ordre de grandeur non limitatives destinées à faciliter la compréhension de cet aspect de l'invention.

## REVENDICATIONS

1. Machine graphique comportant un dispositif d'impression capable d'imprimer des figures, dessins, caractères alphanumériques et/ou symboles sur un même support, et un dispositif de commande recevant des données graphiques sous forme numérique et relatives à des éléments graphiques à reproduire sur le même support d'impression et élaborant en réponse des signaux de commande du dispositif d'impression, caractérisé en ce que :

le dispositif d'impression comprend un module d'impression par points (56,40) et un module d'impression par trait (57,30) distincts l'un de l'autre, et

le dispositif de commande comporte : des moyens de sélection (53) recevant les données graphiques pour discriminer en fonction de critères préalables entre celles relatives à des éléments graphiques devant être imprimés au moyen du module d'impression par points et celles relatives à des éléments graphiques devant être imprimés au moyen du module d'impression par trait, et des moyens (55) d'activation sélective du module d'impression par points et du module d'impression par trait pour transmettre les données graphiques à imprimer sélectivement auxdits modules, en fonction de la discrimination effectuée, et commander l'impression de ces données.

2. Machine graphique selon la revendication 1, caractérisée en ce que les critères préalables de discrimination comprennent le temps d'exécution de l'impression de l'élément graphique, correspondant à la donnée reçue, au moyen de l'un ou l'autre des modules d'impression.

3. Machine graphique selon l'une quelconque des revendications 1 et 2, caractérisée en ce que les critères préalables de la discrimination comprennent la qualité de l'aspect graphique de l'impression de l'élément graphique, correspondant à la données reçue, au moyen de l'un ou l'autre des modules d'impression.

4. Machine graphique selon l'une quelconque des revendications 1 à 3, caractérisée en ce que les moyens de sélection effectuent une discrimination en fonction d'informations contenues dans les données graphiques reçues et relatives à l'orientation des éléments graphiques correspondant à ces données.

5. Machine graphique selon l'une quelconque des revendications 1 à 4, caractérisée en ce que les moyens de sélection effectuent une discrimination en fonction d'informations contenues dans les données graphiques reçues et relatives à la taille des éléments graphiques correspondant à ces données.

6. Machine graphique selon l'une quelconque des revendications 1 à 5, caractérisée en ce que les moyens de sélection effectuent une discrimination en fonction d'informations contenues dans les données graphiques reçues et relatives à la nature des éléments graphiques correspondant à ces données.

7. Machine graphique selon l'une quelconque des revendications 1 à 6, caractérisée en ce que le module d'impression par points et le module d'impression par trait comportent des têtes d'inscription respectives (30,40) distinctes l'une de l'autre.

8. Machine graphique selon la revendication 7, caractérisée en ce que les têtes d'inscription sont montées sur un support commun (20) mobile par rapport à un support d'impression (10).

9. Machine selon la revendication 6, caractérisée en ce que les informations sur la nature des éléments graphiques considérés pour la discrimination prennent en compte des éléments graphiques de remplissage de zone.

10. Machine selon l'une des revendications 1 à 9 caractérisée en ce que les moyens de sélection sont propres à fonctionner en réponse à des commandes externes propres à modifier un ou plusieurs critères de discrimination entre les données.

11. Machine selon la revendication 10 caractérisée en ce que les moyens de sélection sont propres à commander une exécution simplifiée de certains éléments graphiques en faveur d'une plus grande vitesse d'exécution en réponse à une telle commande externe.

Fig.1

VUE DE FACE

Fig. 2

Interface entrée 51

62

61

60

52 Unité de traitements de données graphiques 53

54 Unité de mémoire de micro-programmes

Unité d'exécution 55

Commande d'impression par points 56

Commande d'impression par traits 57

Asservissement position X 58X

Asservissement position Y 58Y

Interface sortie 59

40a Aiguilles

40

42a Ruban

42

34a Plume

34

Barillet 37a

37

14a

14

19

SX

24a

24

29

SY

50

2/4

0125151

FIG.3

de 101 ou 114

Priorité vitesse ? — 134

non → vers 10 2 ou 116

oui

Genération de caractère format standard — 136

Mode points — 138

Fig.4